# EUROPEAN PATENT APPLICATION

(11) **EP 4 755 932 A1**
(43) Date of publication of application: **10.06.2026**
(21) Application number: 24849523.6
(22) Date of filing: 26.07.2024
(51) Int. Cl.: C08F 14/06, C08F 2/44, C08F 2/18

(54) **METHOD FOR PREPARING VINYL CHLORIDE-BASED POLYMER**

(30) Priority: 28.07.2023 KR 20230098673
(71) Applicant: LG Chem, Ltd., Seoul 07336 (KR)
(72) Inventor: KIM, Kun Ji, Daejeon 34122 (KR); HA, Hyun Kyou, Daejeon 34122 (KR); KIM, Hyun Chul, Daejeon 34122 (KR); YOUK, Kyung Seog, Daejeon 34122 (KR); PARK, Jae Hyun, Daejeon 34122 (KR)
(74) Representative: Goddar, Heinz J.
(86) International application number: PCT/KR2024/010963
(87) International publication number: WO 2025/028954

(57) **Abstract**

The present invention relates to a method for efficiently preparing a vinyl chloride-based polymer having a high plasticizer absorption rate and an appropriate average particle diameter by using an optimal combination of a first dispersant and a second dispersant and terminating a reaction at an appropriate point of time.

## Description

### [Technical Field]

### CROSS REFERENCE TO RELATED APPLICATION

The present application claims the priority benefit of Korean Patent Application No. 10-2023-0098673, filed on July 28, 2023, the entire contents of which is incorporated herein for all purposes by this reference.

### Technical Field

The present invention relates to a method for preparing a novel vinyl chloride-based polymer that can efficiently remove unreacted vinyl chloride-based monomers by increasing particle porosity of the prepared vinyl chloride-based polymer, and also has excellent processability due to an excellent plasticizer absorption rate in the vinyl chloride-based polymer.

### [Background Art]

In general, a vinyl chloride-based polymer is a polymers containing 50 % or more of vinyl chloride. Since the vinyl chloride-based polymer is inexpensive, is easy to control hardness, and can be applied to most processing equipment, it has a wide range of applications. In addition, the vinyl chloride-based polymer is a general-purpose resin that is most widely used worldwide as household and industrial materials such as films, sheets, and molded products due to its excellent physical and chemical properties such as mechanical strength, weather resistance, and chemical resistance, and is widely used in many fields, including building materials, household goods, interior materials of an automobile, and decorative materials.

In particular, a vinyl chloride-based resin is not only used for hard applications such as pipes and chassis, but is also widely used for soft applications such as films, sheets, and wires by adding various additives including a plasticizer. However, since the vinyl chloride-based resin for soft applications essentially contains the plasticizer, in order to be used as the vinyl chloride-based resin for soft applications, the vinyl chloride-based polymer must have excellent compatibility with the plasticizer and excellent absorption performance of the plasticizer, and internal pores within the vinyl chloride-based polymer must be developed.

Further, an excellent plasticizer absorption performance results in providing an effect of improving a quality of protrusions, which is one of the important physical properties when manufacturing products such as films and sheets.

Therefore, there is a need for a technology to prepare a vinyl chloride-based polymer that has the excellent plasticizer absorption performance and develops internal pores of the polymer.

In general, in order to prepare a polymer having the excellent plasticizer absorption performance and the developed internal pores, it is known to polymerize the polymer by increasing a content of a secondary dispersant with a low degree of saponification, or to add the dispersant to the polymer in divide or continuously. However, excessive use of the secondary dispersant not only reduces particle stability during the polymerization process to cause polymerization instability, but also deteriorates processing productivity due to a low apparent specific gravity of the prepared polymer, whereby there are difficulties in transporting it for actual use. In addition, adding the dispersant in divide or continuously results in disadvantages of requiring additional facility investment and having restrictions and limitations in improving particle porosity as the dispersant is added during the reaction process because particle formation occurs at an early stage.

Research has been continuously conducted on a novel method for preparing a vinyl chloride-based polymer that solves the above problems and has an excellent plasticizer absorption performance while developing internal pores of the polymer.

Meanwhile, in addition to improving the plasticizer absorption performance, a regulation to reduce a volatile organic compound (VOC) that may be generated by the vinyl chloride-based polymer is becoming increasingly stringent in various industrial sites, such as the construction market, or automobile or electronic industry fields. The volatile organic compound is a carcinogen that causes a disorder in the nervous system through skin contact or respiratory inhalation, and is directly harmful to the human body by causing a bad odor. Further, the volatile organic compound is also known as a harmful substance in environmental terms because it participates in a photochemical reaction under an atmosphere to generate secondary pollutants such as photochemical oxides. Accordingly, countries around the world are implementing the regulation to reduce the volatile organic compound. Since unreacted residual vinyl chloride-based monomers exist as the volatile organic compound even in the vinyl chloride-based polymer, improving a recovery efficiency of the residual monomers in the prepared polymer is emerging as an important issue in the process for preparing the vinyl chloride-based polymer.

As such, research is required on a process for preparing a vinyl chloride-based polymer that has an excellent plasticizer absorption performance and an excellent quality due to the development of internal pores, while improving a recovery efficiency of the unreacted monomers as described above.

### [Disclosure]

### [Technical Problem]

The present invention is to provide a novel method for preparing a vinyl chloride-based polymer that is a non-toxic and has a high-polymerization degree.

### [Technical Solution]

In order to solve the above problems, the present invention provides a novel method for preparing a vinyl chloride-based polymer.

Specifically, (1) the present invention provides a method for preparing a vinyl chloride-based polymer comprising the steps of: (S1) introducing polymerization water, an initiator, a first dispersant, a second dispersant, and vinyl chloride-based monomers into a polymerization reactor and initiating a polymerization reaction, and (S2) obtaining the vinyl chloride-based polymer by terminating the polymerization reaction process, wherein the first dispersant is polyvinyl alcohol having a degree of hydration of 30 to 64 mol%, the second dispersant is polyvinyl alcohol having a degree of hydration of 70 to 95 mol%, a weight ratio of the first dispersant to the second dispersant is 3.4 to 12.0, and the first dispersant and the second dispersant are added in a combined amount of 0.15 to 0.5 parts by weight based on 100 parts by weight of the vinyl chloride-based monomers.
(2) The present invention provides the method for preparing the vinyl chloride-based polymer according to the item (1), wherein the polymerization reaction is a suspension polymerization.
(3) The present invention provides the method for preparing the vinyl chloride-based polymer according to the item (1) or (2), wherein the first dispersant is polyvinyl alcohol having a degree of hydration of 45 to 60 mol%.
(4) The present invention provides the method for preparing the vinyl chloride-based polymer according to any one of the items (1) to (3), wherein the second dispersant is polyvinyl alcohol having a degree of hydration of 75 to 80 mol%.
(5) The present invention provides the method for preparing the vinyl chloride-based polymer according to any one of the items (1) to (4), wherein a weight ratio of the first dispersant to the second dispersant is 5.0 to 9.0.
(6) The present invention provides the method for preparing the vinyl chloride-based polymer according to any one of the items (1) to (5), wherein the first dispersant and the second dispersant are added in a combined amount of 0.05 to 0.4 parts by weight based on 100 parts by weight of the vinyl chloride-based monomers.
(7) The present invention provides the method for preparing the vinyl chloride-based polymer according to any one of the items (1) to (6), wherein the initiator is one or more selected from the group consisting of a diacyl peroxide-based initiator, a peroxydicarbonate-based initiator, a peroxyester-based initiator, a sulfate-based initiator, and an azo-based initiator.
(8) The present invention provides the method for preparing the vinyl chloride-based polymer according to any one of the items (1) to (7), wherein the initiator is added in an amount of 0.02 to 0.2 parts by weight based on 100 parts by weight of the vinyl chloride-based monomers.
(9) The present invention provides the method for preparing the vinyl chloride-based polymer according to any one of the items (1) to (8), wherein the polymerization reaction is performed in the presence of a protective colloid.
(10) The present invention provides the method for preparing the vinyl chloride-based polymer according to any one of the items (1) to (9), wherein the protective colloid is one or more selected from the group consisting of a vinyl alcohol resin, a cellulose, and an unsaturated organic acid polymer.
(11) The present invention provides the method for preparing the vinyl chloride-based polymer according to any one of the items (1) to (10), wherein the protective colloid is added in an amount of 0.03 to 3.0 parts by weight based on 100 parts by weight of the vinyl chloride-based monomers.
(12) The present invention provides the method for preparing the vinyl chloride-based polymer according to any one of the items (1) to (11), wherein in the step (S2), a reaction terminator is added when a pressure of the polymerization reactor reaches 4.5 to 6.0 kg/cm².
(13) The present invention provides the method for preparing the vinyl chloride-based polymer according to any one of the items (1) to (12), wherein the reaction terminator is one or more selected from the group consisting of a phenol compound, an amine compound, a nitrile compound, and a sulfur compound.
(14) The present invention provides the method for preparing the vinyl chloride-based polymer according to any one of the items (1) to (13), further comprising the step (S3) of dehydrating and drying the obtained vinyl chloride-based polymer.
(15) The present invention provides the method for preparing the vinyl chloride-based polymer according to any one of the items (1) to (14), wherein a plasticizer absorption rate (CPA) in the vinyl chloride-based polymer is 38 % by weight or more.

### [Advantage Effects]

The present invention provides a method for preparing a vinyl chloride-based polymer that can be applied to the field of various products by increasing a plasticizer absorption rate and a particle porosity of the prepared vinyl chloride-based polymer, and that also has high quality due to efficient removal of unreacted monomers.

### [Mode for Invention]

Hereinafter, the present invention will be described in more detail.

The terms and words used in this specification and claims should not be construed to be limited to their common or dictionary meanings, but should be construed with meanings and concepts consistent with the technical idea of the present invention, based on the principle that the inventor can appropriately define terminological concepts in order to explain his invention in the best way.

Meanwhile, the term "vinyl chloride-based polymer" used in this specification may refer to polymer chains derived from vinyl chloride-based monomers, which comprehensively represents compounds produced by polymerizing the vinyl chloride-based monomers, that is, by polymerizing the vinyl chloride monomer alone or by polymerizing a mixture of the vinyl chloride monomer and vinyl-based monomers that can be copolymerized with the vinyl chloride monomer.

### Method for preparing a vinyl chloride-based polymer

The present invention provides a method for preparing a vinyl chloride-based polymer comprising the steps of: (S1) introducing polymerization water, an initiator, a first dispersant, a second dispersant, and vinyl chloride-based monomers into a polymerization reactor and initiating a polymerization reaction, and (S2) obtaining the vinyl chloride-based polymer by terminating the polymerization reaction process, wherein the first dispersant is polyvinyl alcohol having a degree of hydration of 30 to 64 mol%, the second dispersant is polyvinyl alcohol having a degree of hydration of 70 to 95 mol%, a weight ratio of the first dispersant to the second dispersant is 3.4 to 12.0, and the first dispersant and the second dispersant are added in a combined amount of 0.15 to 0.5 parts by weight based on 100 parts by weight of the vinyl chloride-based monomers.

According to the method for preparing the vinyl chloride-based polymer of the present invention, the vinyl chloride-based polymer can be prepared using the existing equipment without investing separate equipment by adding an entire amount of the dispersant at the beginning of the reaction, and the vinyl chloride-based polymer having a high particle porosity and a plasticizer absorption rate can be prepared by optimizing conditions for adding the first dispersant and the second dispersant.

Below, the method for preparing the vinyl chloride-based polymer according to the present invention will be described step by step.

### Step (S1) of initiating a polymerization reaction

A method for preparing a vinyl chloride-based polymer according to the present invention comprises the step (S1) of introducing polymerization water, an initiator, a first dispersant, a second dispersant, and vinyl chloride-based monomers into a polymerization reactor and initiating a polymerization reaction.

The Step (S1) is a step of initiating the polymerization reaction according to a general method for preparing the vinyl chloride-based polymer. In particular, the polymerization in the vinyl chloride-based polymer preparation method of the present invention is a suspension polymerization, wherein the suspension polymerization may be performed in the presence of polymerization water. The polymerization water may include as a polymerization solvent various types of polymerization water such as distilled water or deionized water, and preferably, deionized water. A temperature of the polymerization water may be appropriately selected in consideration of the temperature at which the suspension polymerization is carried out, and an amount of the polymerization water may also be appropriately used depending on the polymerization conditions, for example, the polymerization water of 70 parts by weight or more, specifically 70 to 300 parts by weight, based on 100 parts by weight of the vinyl chloride-based monomers may be used.

The initiator is not particularly limited as long as it is applied to the suspension polymerization of the vinyl chloride-based monomers. Specifically, the initiator may be one or more selected from the group consisting of a diacyl peroxide-based initiator, a peroxydicarbonate-based initiator, a peroxyester-based initiator, a sulfate-based initiator, and an azo-based initiator.

More specifically, the diacyl peroxide-based initiator may be one or more selected from the group consisting of dicumyl peroxide, dipentyl peroxide, 3,3,5-trimethyl hexanoyl peroxide, and dilauryl peroxide. The peroxydicarbonate-based initiator may be one or more selected from the group consisting of diisopropyl peroxydicarbonate, di-sec-butyl peroxydicarbonate, and di-2-ethylhexyl peroxide. The peroxyester-based initiator may be t-butylperoxypivalate, cumylperoxydecanoate, t-butylperoxyneodecanoate, or a mixture thereof. The sulfate-based initiator may be potassium persulfate, ammonium persulfate, or a mixture thereof. The azo-based initiator may be azobis-2,4-dimethylvaleronitrile.

The initiator may be added in an amount of 0.02 to 0.2 parts by weight, preferably 0.04 to 0.12 parts by weight, based on 100 parts by weight of the vinyl chloride-based monomers. If an amount of the added initiator is too small, the reaction time is delayed to decrease productivity, and if an amount of the added initiator is too large, the initiator may not be completely consumed during the polymerization process to remain in the finally prepared vinyl chloride-based polymer, thereby deteriorating thermal stability of the resin.

The dispersant is added together with the vinyl chloride-based monomers and serves to disperse the vinyl chloride-based monomers in a solvent, and different types of the first dispersant and the second dispersant may be used together. More specifically, the first dispersant may be polyvinyl alcohol having a relatively low degree of hydration of 30 to 64 mol%, and the second dispersant may be polyvinyl alcohol having a relatively high degree of hydration of 70 to 95 mol%. In this way, in case two types of polyvinyl alcohol having different degrees of hydration are mixed and used as the dispersant, stability of the final product particles can be further increased and also basic physical properties such as the polymer particle diameter and the plasticizer absorption rate can be easily controlled. In addition, the basic physical properties required for the product can be satisfied as well as a thickness of the skin layer is not too thick, thereby making it possible to obtain polymer particles having a relatively fast melting property.

More preferably, the first dispersant may be polyvinyl alcohol having a degree of hydration of 45 to 60 mol%, and the second dispersant may be polyvinyl alcohol having a degree of hydration of 75 to 80 mol%. If the degree of hydration of the first and second dispersants is within the above-mentioned range, a dispersion effect may be particularly excellent by the first and second dispersants. Meanwhile, since the polyvinyl alcohol used as the dispersant in this step is in the form in which polyvinyl acetate is hydrated and some of the acetate is substituted with alcohol, the degree of hydration is defined as a degree to which acetate is substituted with alcohol.

Meanwhile, in this step, a weight ratio of the first dispersant to the second dispersant may be 3.4 to 12.0, preferably 3.4 or more, 3.7 or more, 4.0 or more, 4.5 or more, 4.8 or more, or 5.0 or more, and may be 12.0 or less, 11.5 or less, 11 or less, 10 or less, 9 or less, 8 or less, 7 or less, 6 or less, or 5.5 or less. According to the present invention, it may be preferable to add a greater amount of the first dispersant, which has a relatively low degree of hydration, than an amount of the second dispersant. If a content of the first dispersant is excessively high compared to the second dispersant, there may be problems in that stability of the particles decrease during the polymerization process to generate a large amount of scale, and the vinyl chloride-based polymer particles are not obtained in a certain shape, and furthermore, a bulk density of the finally prepared vinyl chloride-based polymer is too low to reduce an amount of extrusion. On the contrary, if a smaller amount of the first dispersant is added compared to the second dispersant, pores inside the obtained vinyl chloride-based polymer particles may be reduced to lower the plasticizer absorption rate, whereby release of the residual monomers into an atmosphere may not be proceed with smoothly so that a content of the unreacted monomers remaining in the final product may be increased rapidly.

In this step, the first dispersant and the second dispersant may be added in a combined amount of 0.15 to 0.5 parts by weight compared to 100 parts by weight of the vinyl chloride-based monomers, and may be added particularly preferably in an amount of 0.15 parts by weight or more or 0.155 parts by weight or more and 0.5 parts by weight or less, 0.45 parts by weight or less, or 0.4 parts by weight or less, compared to 100 parts by weight of the vinyl chloride-based monomers. In addition, the first dispersant may be added in an amount of 0.01 to 0.5 parts by weight based on 100 parts by weight of the vinyl chloride-based monomer, and the second dispersant may be added in an amount of 0.01 to 0.2 parts by weight based on 100 parts by weight of the vinyl chloride-based monomer. If an amount of the added first and second dispersants is too small, the dispersants themself may not be able to perform their role sufficiently, which may deteriorate polymerization stability. If the dispersants are used in a too large amount, the excessively added dispersant components may remain in the finally prepared vinyl chloride-based polymer and act as impurities, which results in adversely affecting product quality.

Meanwhile, the polymerization reaction initiated in the step (S1) may be performed in the presence of a protective colloid. The protective colloid may be one or more selected from the group consisting of a vinyl alcohol resin, a cellulose, and an unsaturated organic acid polymer.

The vinyl alcohol resin used as the protective colloid may preferably have a degree of hydration of 30 to 90 % by weight and may be preferable that a viscosity of a 4% aqueous solution is 10 to 60 cps at 15 to 25°C. Further, the cellulose used as the protective colloid may preferably have a hydroxypropyl group content of 3 to 20 % by weight and may be preferable that a viscosity of a 2% aqueous solution is 10 to 20,000 cps at 15 to 25°C. In addition, the unsaturated organic acid polymer used as the protective colloid may be one or more selected from the group consisting of an acrylic acid polymer, a methacrylic acid polymer, an itaconic acid polymer, a fumaric acid polymer, a maleic acid polymer, a succinic acid polymer, and a gelatin. If the protective colloid that satisfies the above-mentioned conditions is used, stability of the vinyl chloride-based monomers during the preparation process can be further improved.

The protective colloid may be added in an amount of 0.03 to 3.0 parts by weight, particularly preferably 0.05 to 2.0 parts by weight, based on 100 parts by weight of the vinyl chloride-based monomers. If an amount of the added protective colloid is within the above-mentioned preferable range, a droplet stability increases so that a phenomenon of particle cleavage and agglomeration is appropriately controlled during the preparation of the vinyl chloride-based polymer, thereby making it possible to prepare the vinyl chloride-based polymer containing desirable internal pores.

In this step, if necessary, a hydrogen ion concentration regulator may be added to the polymerization reactor. The hydrogen ion concentration regulator which is available to the present invention includes sodium bicarbonate (NaHCO₃), sodium borate (Na₂B₄O₇), sodium diphosphate (Na₂HPO₄), sodium carbonate (Na₂CO₃), potassium dihydrogen phosphate (KH₂PO₄), ammonium hydroxide (NH₄OH), potassium tartrate (KHC₄H₄O₆), potassium hydrogen phthalate (KHC₈H₄O₄), calcium hydroxide (Ca(OH)₂), etc., which can be used alone or in a combination of two or more.

### Step (S2) of proceeding and terminating a polymerization reaction

After initiating the polymerization reaction as described above, the step (S2) of proceeding and terminating the polymerization reaction can be performed. According to the step (S2), the vinyl chloride-based polymer can be finally obtained by continuing the polymerization reaction for a certain time at a certain temperature condition and terminating the reaction.

The temperature condition at which the polymerization reaction proceeds in this step may be 60 °C or lower, preferably 55 °C or lower, 50 °C or lower, or 47 °C or lower, and may be 30 °C or higher, 35 °C or higher, 40 °C or higher, or 42 °C or higher. Additionally, since the polymerization reaction of the vinyl chloride-based polymer is an exothermic reaction, a heat removal process may be performed through a reactor jacket and a reflux cooler (R/CN) to minimize change in the temperature during the polymerization process. If the polymerization reaction proceeds at the above temperature range, generation of a foam can be prevented to suppress repolymerization and scale formation. In addition, at the above temperature range, decomposition of the polymerization initiator remaining at an end of the reaction is induced so that the vinyl chloride-based polymer having better physical properties can be prepared after the reaction.

After the polymerization reaction has proceeded for a certain time, the reaction may be terminated at a point of time when it is determined that the reaction has been sufficiently completed. The termination of reaction may be performed by adding a reaction terminator into the polymerization reactor. The reaction terminator may terminate the polymerization reaction by reacting it with the remaining unreacted initiator to lose function of the initiator. The reaction terminator may be one or more selected from the group consisting of a phenol compound, an amine compound, a nitrile compound, and a sulfur compound. The phenol compound may be one or more selected from the group consisting of triethylene glycol-bis-3-(3-t-butyl-4-hydroxy-5-methylphenyl)propionate, hydroquinone, p-methoxy phenol, t-butyl-4-hydroxyanisole, n-octadecyl-3-(4-hydroxy-3,5-di-t-butylphenyl)propionate, 2,5-di-t-butyl hydroquinone, 4,4'-butylidene bis(3-methyl-6-t-butyl phenol), t-butyl catechol, 4,4-thiobis(6-t-butyl-m-cresol), and tocopherol. The amine compound may be one or more selected from the group consisting of N,N-diphenyl-p-phenylenediamine and 4,4-bis(dimethylbenzyl)diphenyl. The nitrile compound may be one or more selected from the group consisting of 2-phenyl nitronyl nitroxide, 3-imidazoline nitroxide, and 4-hydroxy-2,2,6,6-tetramethyl-piperidine-1-oxyl. The sulfur compound may be one or more selected from the group consisting of dodecyl mercaptan and 1,2-biphenyl-2-thiol. The point of time the reaction is terminated may be when a pressure of the polymerization reactor reaches 4.5 to 6.0 kg/cm² during the polymerization reaction. Preferably, the pressure of the polymerization reactor may be 4.5 kg/cm² or more, 4.6 kg/cm² or more, 4.7 kg/cm² or more, 4.8 kg/cm² or more, 4.9 kg/cm² or more, 5.0 kg/cm² or more, 5.1 kg/cm² or more, 5.2 kg/cm² or more, 5.3 kg/cm² or more, 5.4 kg/cm² or more, or 5.5 kg/cm² or more, and may be 6.0 kg/cm² or less, 5.9 kg/cm² or less, or 5.8 kg/cm² or less. If the point of time of the reaction termination is earlier than the above range, a sufficient conversion rate cannot be obtained, and if the point of time of the reaction termination is later than the above range, although the conversion rate is substantially the same, the energy used to operate the reaction process increases, which may deteriorate an economic feasibility of the preparation process.

In a method for preparing the vinyl chloride-based polymer according to the present invention, additives such as an antioxidant, a base, a cross-linking agent, a polymerization regulator, a chain transfer agent, an antistatic agent, an anti-scaling agent, and a surfactant may be additionally added without being particularly limited for the types and contents of the additives, and may be used in the common types and amounts of the additives known in the art. The additives may be added all at once or sequentially at any point of time during the polymerization process.

### Dehydration and drying step (S3)

A method for preparing the vinyl chloride-based polymer according to the present invention may further comprise the step (S3) of dehydrating and drying the vinyl chloride-based polymer obtained through the previous steps. Since the vinyl chloride-based polymer obtained through the previous steps is in the form of a slurry in which vinyl chloride-based polymer particles are mixed with unreacted monomers and polymerization water, only the vinyl chloride-based polymer can be selectively recovered through dehydration and drying processes of the mixture.

The dehydration and drying method in this step is not particularly limited, and any known dehydration and drying method for preparing the vinyl chloride-based polymer can be applied without particular limitation. For example, the final vinyl chloride-based polymer may be obtained by first proceeding the dehydration using an equipment such as a centrifugal separator, and then secondarily performing the drying step using an equipment such as a fluidized bed dryer. The vinyl chloride-based polymer obtained after being subjected to the dehydration and drying steps may be in the form of beads.

A plasticizer absorption rate (CPA) of the vinyl chloride-based polymer prepared according to the method of the present invention may be 40 % by weight or more, preferably 41 % by weight or more, 42 % by weight or more, 43 % by weight or more, 44 % by weight or more, or 45 % by weight or more, and may be 60 % by weight or less, 59 % by weight or less, 58 % by weight or less, or 57 % by weight or less. The vinyl chloride-based polymer prepared according to the method of the present invention has a high internal porosity so that it can absorb a large amount of the plasticizer, thereby providing excellent processability.

Hereinafter, preferred Examples are described to aid understanding of the present invention. However, the following Examples are to merely illustrate the present invention and are not intended to limit the scope of the present invention.

### Examples and Comparative Examples

390 kg of deionized water was added to a stainless-steel polymerization reactor having an internal volume of 1 m³ equipped with a reflux condenser and a stirrer, and polyvinyl alcohol having a degree of hydration of 53 mol% as a first dispersant and polyvinyl alcohol having a degree of hydration of 78.5 mol% as a second dispersant were added in batches along with 30 g of hydroxypropylmethyl cellulose as a protective colloid. Thereafter, 300 kg of vinyl chloride monomer was added, and then 240 g of a 75 % by weight solution of t-butyl peroxy neodecanoate, an organic peroxide initiator composition, was added as an initiator.

Thereafter, the reaction was carried out while maintaining a temperature of the polymerization reaction at 45°C, and was terminated by adding 15 g of 4-hydroxy-2,2,6,6-tetramethyl-piperidine-1-oxyl and 60 g of triethylene glycol-bis-3-(3-t-butyl-4-hydroxy-5-methylphenyl)propionate as a reaction terminator at a point of time when a pressure of the polymerization reactor reached a certain value. Subsequently, unreacted monomers and polymer slurry were separated and recovered from the reactor, respectively, and then the polymer slurry was dehydrated and dried in a fluidized bed dryer to obtain a bead-shaped vinyl chloride-based polymer.

The following Table 1 summarizes an amount of the added first and second dispersants, a weight ratio of the first dispersant to the second dispersant, a combined amount of the first and second dispersants compared to 100 parts by weight of the vinyl chloride-based monomers, and a pressure of the polymerization reactor at a point of time of terminating the reaction, which were used in each of Examples and Comparative Examples.

**[Table 1]**

| | First dispersant (g) | Secon d disper sant (g) | Weight ratio of first dispersant to second dispersant | Combined amount of first and second dispersants | Pressure of terminating reaction (kg/cm²) |
|---|---|---|---|---|---|
| Example 1 | 450 | 90 | 5.0 | 0.18 | 5.75 |
| Example 2 | 480 | 96 | 5.0 | 0.192 | 5.75 |
| Example 3 | 510 | 102 | 5.0 | 0.204 | 5.75 |
| Example 4 | 360 | 105 | 3.43 | 0.155 | 5.75 |
| Example 5 | 360 | 90 | 4.0 | 0.15 | 5.75 |
| Example 6 | 600 | 150 | 4.0 | 0.25 | 5.75 |
| Example 7 | 675 | 75 | 9.0 | 0.25 | 5.75 |
| Example 8 | 690 | 60 | 11.5 | 0.25 | 5.75 |
| Example 9 | 900 | 150 | 6.0 | 0.35 | 5.75 |
| Example 10 | 1230 | 246 | 5.0 | 0.492 | 5.75 |
| Example 11 | 450 | 90 | 5.0 | 0.18 | 5.90 |
| Example 12 | 450 | 90 | 5.0 | 0.18 | 6.00 |
| Comparative Example 1 | 450 | 285 | 1.58 | 0.245 | 5.75 |
| Comparative Example 2 | 285 | 285 | 1.0 | 0.19 | 5.75 |
| Comparative Example 3 | 285 | 84 | 3.39 | 0.123 | 5.75 |
| Comparative Example 4 | 180 | 135 | 1.33 | 0.105 | 5.75 |
| Comparative Example 5 | 1377 | 153 | 9.0 | 0.51 | 5.75 |

### Experimental Example 1. Measurement of average particle diameter of prepared vinyl chloride-based polymer

A average particle diameter of the bead-typed vinyl chloride-based polymer prepared by Examples and Comparative Examples was measured. More specifically, the average particle diameter was measured using a HELOS particle size analyzer according to ISO 13320. The results were summarized in the following Table 2.

**[Table 2]**

| | Average particle diameter (D50, *µ*m) |
|---|---|
| Example 1 | 142 |
| Example 2 | 141 |
| Example 3 | 140 |
| Example 4 | 148 |
| Example 5 | 147 |
| Example 6 | 137 |
| Example 7 | 127 |
| Example 8 | 122 |
| Example 9 | 123 |
| Example 10 | 115 |
| Example 11 | 142 |
| Example 12 | 142 |
| Comparative Example 1 | 142 |
| Comparative Example 2 | 149 |
| Comparative Example 3 | 151 |
| Comparative Example 4 | 157 |
| Comparative Example 5 | 101 |

As can be seen in Table 2, it was confirmed that the vinyl chloride-based polymer prepared according to the method of the present invention had an average particle diameter above a certain range, which makes it possible to prepare the vinyl chloride-based polymer beads having appropriate sizes by the method of the present invention. Meanwhile, Comparative Example 5 in which an excessive amount of the first and second dispersants was added showed that a vinyl chloride-based polymer having a small particle diameter was prepared due to the excessively added dispersants. A decrease in the particle diameter of the vinyl chloride-based polymer means an increase in the proportion of fine particles, which may deteriorate workability by increasing fine powders generated during the processing process.

### Experimental Example 2. Measurement of plasticizer absorption rate

A plasticizer absorption rate of the vinyl chloride-based polymer prepared by Examples and Comparative Examples was measured. The Measurement was carried out using a centrifuge (Continent 512R, Hanil Co., Ltd.) based on the ASTM D3367 measurement method. The results were summarized in the following Table 3.

**[Table 3]**

| | Plasticizer absorption rate (CPA, % by weight) |
|---|---|
| Example 1 | 45.5 |
| Example 2 | 45.5 |
| Example 3 | 45.6 |
| Example 4 | 42.8 |
| Example 5 | 43.8 |
| Example 6 | 43.9 |
| Example 7 | 52.4 |
| Example 8 | 56.7 |
| Example 9 | 47.5 |
| Example 10 | 46.0 |
| Example 11 | 46.2 |
| Example 12 | 46.6 |
| Comparative Example 1 | 36.8 |
| Comparative Example 2 | 37.8 |
| Comparative Example 3 | 38.9 |
| Comparative Example 4 | 32.7 |
| Comparative Example 5 | 48.2 |

As can be seen in Table 3, the vinyl chloride-based polymer prepared according to the method of the present invention showed a high plasticizer absorption rate of 40 % by weight or more. On the other hand, Comparative Examples 1 to 4 in which a ratio of the first dispersant to the second dispersant was lower than that of the present invention showed that the polymer having the plasticizer absorption rate significantly reduced was prepared because of insufficient workability of the first dispersant. From this, it was confirmed that according to the preparation method of the present invention, the vinyl chloride-based polymer that can be used in various fields requiring the high plasticizer absorption rate can be efficiently prepared.

### Experimental Example 3. Measurement of an amount of recovered vinyl chloride-based monomers

A recovered amount of unreacted vinyl chloride-based monomers was measured through a flow meter by depressurizing the slurry after the polymerization was completed. The results were summarized in the following Table 4.

**[Table 4]**

| | Weight of recovered vinyl chloride-based monomers (kg) |
|---|---|
| Example 1 | 49.6 |
| Example 2 | 49.6 |
| Example 3 | 49.6 |
| Example 4 | 49.8 |
| Example 5 | 49.2 |
| Example 6 | 48.9 |
| Example 7 | 48.4 |
| Example 8 | 47.9 |
| Example 9 | 47.9 |
| Example 10 | 49.2 |
| Example 11 | 49.1 |
| Example 12 | 48.8 |
| Comparative Example 1 | 34.6 |
| Comparative Example 2 | 35.7 |
| Comparative Example 3 | 41.9 |
| Comparative Example 4 | 35.3 |
| Comparative Example 5 | 44.6 |

It can be seen from the above results that the vinyl chloride-based polymer prepared according to the method of the present invention can rapidly recover the unreacted vinyl chloride-based monomers due to the high plasticizer absorption rate, while the vinyl chloride-based polymer prepared according to the method of Comparative Examples 1 to 4 has the low plasticizer absorption rate so that a weight of the recovered vinyl chloride-based monomers is low, which means that the unreacted vinyl chloride-based monomers are not recovered well.

## Claims

1. A method for preparing a vinyl chloride-based polymer comprising the steps of:
(S1) introducing polymerization water, an initiator, a first dispersant, a second dispersant, and vinyl chloride-based monomers into a polymerization reactor and initiating a polymerization reaction, and
(S2) obtaining the vinyl chloride-based polymer by terminating the polymerization reaction process,
wherein the first dispersant is polyvinyl alcohol having a degree of hydration of 30 to 64 mol%,
the second dispersant is polyvinyl alcohol having a degree of hydration of 70 to 95 mol%,
a weight ratio of the first dispersant to the second dispersant is 3.4 to 12.0, and
the first dispersant and the second dispersant are added in a combined amount of 0.15 to 0.5 parts by weight based on 100 parts by weight of the vinyl chloride-based monomers.

2. The method for preparing the vinyl chloride-based polymer according to claim 1,
wherein the polymerization reaction is a suspension polymerization.

3. The method for preparing the vinyl chloride-based polymer according to claim 1,
wherein the first dispersant is polyvinyl alcohol having a degree of hydration of 45 to 60 mol%.

4. The method for preparing the vinyl chloride-based polymer according to claim 1,
wherein the second dispersant is polyvinyl alcohol having a degree of hydration of 75 to 80 mol%.

5. The method for preparing the vinyl chloride-based polymer according to claim 1,
wherein the weight ratio of the first dispersant to the second dispersant is 5.0 to 9.0.

6. The method for preparing the vinyl chloride-based polymer according to claim 1,
wherein the first dispersant and the second dispersant are added in a combined amount of 0.15 to 0.4 parts by weight based on 100 parts by weight of the vinyl chloride-based monomers.

7. The method for preparing the vinyl chloride-based polymer according to claim 1,
wherein the initiator is one or more selected from the group consisting of a diacyl peroxide-based initiator, a peroxydicarbonate-based initiator, a peroxyester-based initiator, a sulfate-based initiator, and an azo-based initiator.

8. The method for preparing the vinyl chloride-based polymer according to claim 1,
wherein the initiator is added in an amount of 0.02 to 0.2 parts by weight based on 100 parts by weight of the vinyl chloride-based monomers.

9. The method for preparing the vinyl chloride-based polymer according to claim 1,
wherein the polymerization reaction is performed in the presence of a protective colloid.

10. The method for preparing the vinyl chloride-based polymer according to claim 9,
wherein the protective colloid is one or more selected from the group consisting of a vinyl alcohol resin, a cellulose, and an unsaturated organic acid polymer.

11. The method for preparing the vinyl chloride-based polymer according to claim 9,
wherein the protective colloid is added in an amount of 0.03 to 3.0 parts by weight based on 100 parts by weight of the vinyl chloride-based monomers.

12. The method for preparing the vinyl chloride-based polymer according to claim 1,
wherein in the step (S2), a reaction terminator is added when a pressure of the polymerization reactor reaches 4.5 to 6.0 kg/cm².

13. The method for preparing the vinyl chloride-based polymer according to claim 12,
wherein the reaction terminator is one or more selected from the group consisting of a phenol compound, an amine compound, a nitrile compound, and a sulfur compound.

14. The method for preparing the vinyl chloride-based polymer according to claim 1,
further comprising the step (S3) of dehydrating and drying the obtained vinyl chloride-based polymer.

15. The method for preparing the vinyl chloride-based polymer according to claim 1,
wherein a plasticizer absorption rate (CPA) in the vinyl chloride-based polymer is 40 % by weight or more.
